# EUROPÄISCHE PATENTSCHRIFT

(11) **EP 0 722 991 B1**
(45) Veröffentlichungstag und Bekanntmachung des Hinweises auf die Patenterteilung: **02.08.2000**
(21) Anmeldenummer: 96100190.6
(22) Anmeldetag: 09.01.1996
(51) Int. Cl.: C09B 67/48, C09B 67/10, C09B 43/42, C09B 67/38, D06P 1/18, C09B 29/085

(54) **Färbestabiler Monoazofarbstoff, dessen Herstellung und Verwendung**
Colour-fast monoazo dye, its manufacture and its use
Colorant monoazoique à teinte stable, sa fabrication et son utilisation

(30) Priorität: 23.01.1995 DE 19501845
(43) Veröffentlichungstag der Anmeldung: 24.07.1996
(73) Patentinhaber: DyStar Textilfarben GmbH & Co. Deutschland KG, 60318 Frankfurt am Main (DE)
(72) Erfinder: Bühler, Ulrich, Dr., D-63755 Alzenau (DE)

(56) Entgegenhaltungen:
- EP-A- 0 545 161
- DE-A- 3 322 301
- US-A- 2 007 382
- CHEMICAL ABSTRACTS, vol. 81, no. 20, 18.November 1974 Columbus, Ohio, US; abstract no. 122767, Seite 131; XP002001301 & JP-A-49 037 931 (MITSUBISHI CHEMICAL INDUSTRIES CO.) 9.April 1974
- CHEMICAL ABSTRACTS, vol. 99, no. 22, 28.November 1983 Columbus, Ohio, US; abstract no. 177482d, NI, JIABO ET AL: "new blue monoazo disperse dyes" Seite 85; XP002001302 & HUADONG HUAGONG XUEYUAN XUEBAO, Nr. 4, 1982, Seiten 437-448,

## Beschreibung

Die vorliegende Erfindung betrifft eine neue färbestabile Kristallmodifikation ("β-Modifikation") des Farbstoffs der Formel I, 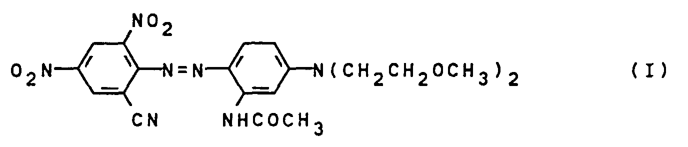 die im Röntgenbeugungsdiagramm (Cu-K_{α}-Strahlung) Linien bei folgenden Beugungswinkeln 2 θ (°) aufweist:
- Linien starker Intensität:: 7,15; 10,25; 25,9;
- Linien mittlerer Intensität:: 16,9; 19,5; 20,1; 21,85; 22,65; 23,4; 25,2; 28,5; 32,45.

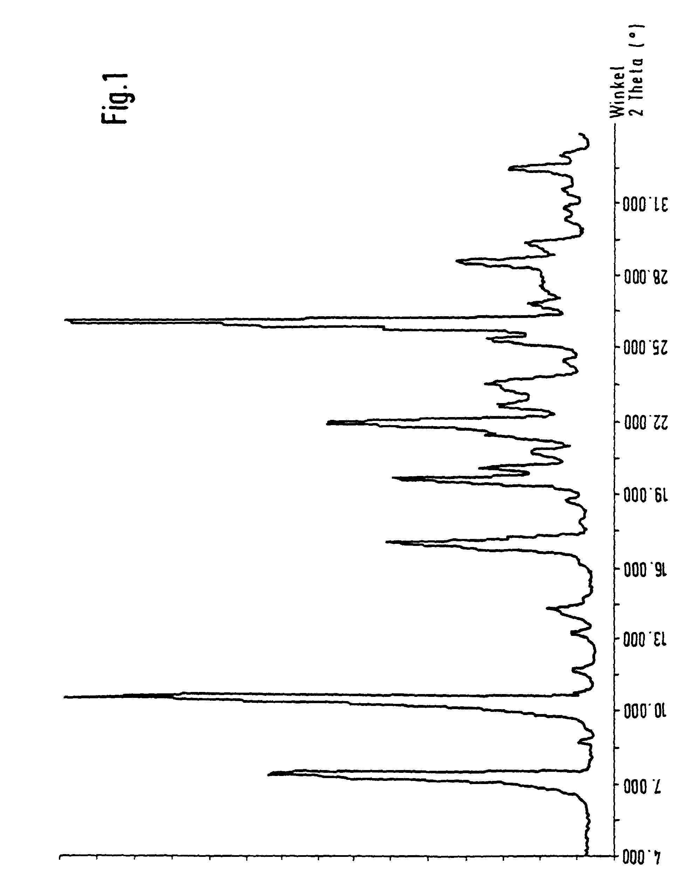

Das mit Cu-K_{α}-Strahlung aufgenommene Röntgenbeugungsdiagramm der färbestabilen β-Modifikation ist in Figur 1 dargestellt. Zur Aufnahme wurde ein rechnergesteuertes Siemens D 500-Pulverdiffraktometer benutzt.

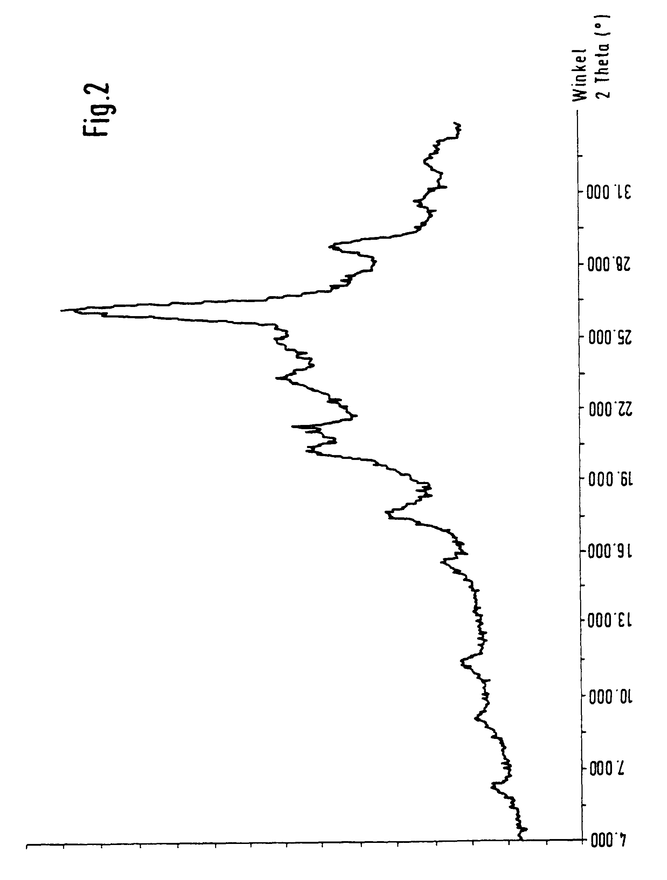

Der Farbstoff der Formel I ist bekannt, seine Herstellung wird z.B. in der japanischen Patentschrift 74 37931 beschrieben. Hierbei wird 2-Cyan-4,6-dinitroanilin diazotiert und auf 3-(Bis-(2-methoxyethyl)amino)acetanilid gekuppelt. Es entsteht so ein Farbstoff in einer wenig kristallinen, instabilen Modifikation ("α₁-Modifikation"), deren Röntgenbeugungsdiagramm (Cu-K_{α}-Strahlung) in Figur 2 dargestellt ist.

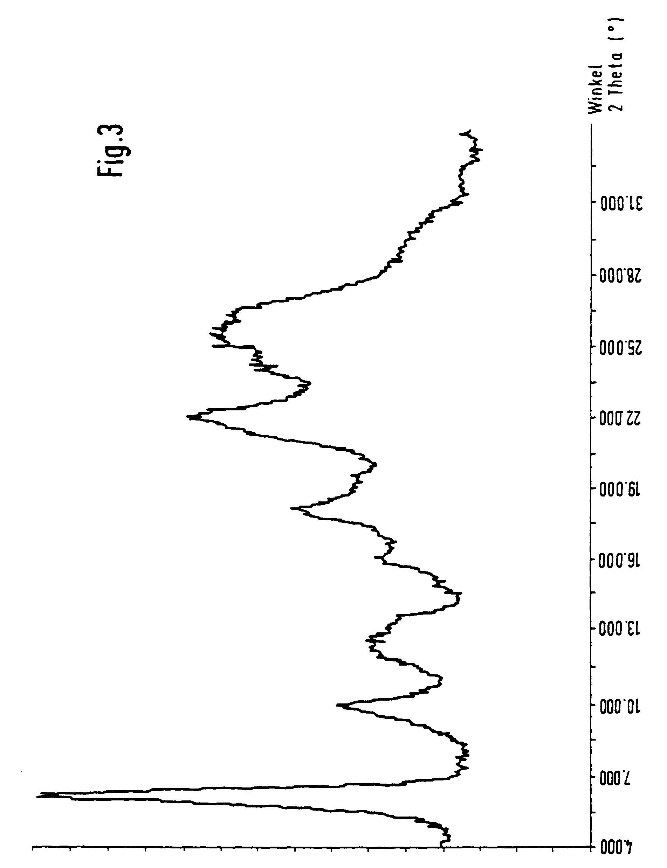

Eine alternative Synthese wird in der EP-A-545 161 beschrieben. Hierbei wird der Farbstoff der Formel I nach dem sogenannten Cyanaustausch-Verfahren durch Umsetzung von z.B. 2-Acetylamino-4-(bis-(2-methoxyethyl)amino)-2'-brom-4',6'-dinitroazobenzol mit Cyanid hergestellt. Er fällt dabei in einer Kristallmodifikation ("α₂-Modifikation") an, deren Röntgenbeugungsdiagramm (Cu-K_{α}-Strahlung) in Figur 3 wiedergegeben ist und die charakterisiert ist durch Linien bei folgenden Beugungswinkeln 2 θ (°):
- Linien starker Intensität:: 6,1; 18,0; 22,0; 24,3; 25,6; 26,3;
- Linien mittlerer Intensität:: 9,9; 12,5; 13,2; 16.

Diese Kristallmodifikation ist ebenfalls instabil.

Pulver- und Flüssigpräparationen, die aus dem Farbstoff in diesen instabilen Kristallmodifikationen hergestellt werden, weisen jedoch erhebliche technische Mängel auf, insbesondere bei ihrer Handhabung, jedoch auch bereits bei ihrer Herstellung sowie auch beim Färben von textilen Polyestermaterialien. Technische Mängel bei ihrer Handhabung treten beispielsweise bei der Redispergierung dieser Präparationen auf, d.h. bei ihrer Einarbeitung in Färbeflotten und Druckpasten. Probleme treten jedoch insbesondere auf, wenn diese Präparationen in redispergierter Form in modernen Farbküchen eingesetzt werden.

Problemlos läßt sich der Farbstoff einsetzen, wenn er in der erfindungsgemäßen β-Modifikation vorliegt. Mit dieser β-Modifkation lassen sich bei der Herstellung von Pulverpräparationen höhere Raum-Zeit-Ausbeuten erzielen, und Färbungen auf Stückware und Wickelkörpern fallen stippenfrei bzw. ohne Farbstoffablagerungen, also homogen, an.

Die erfindungsgemäße β-Modifikation kann durch Erhitzen der α-Modifikationen in wäßriger Phase auf Temperaturen von 70 bis 150°C, vorzugsweise 80 bis 130°C, erhalten werden. In der Regel erfolgt dieses Erhitzen in wäßriger Suspension, zweckmäßigerweise unter Rühren. Liegen die anzuwendenden Temperaturen über dem Siedepunkt der wäßrigen Phase, wird die Umwandlung in die β-Modifikation in geschlossenen Gefäßen, beispielsweise Autoklaven, ausgeführt. Erhitzt wird so lange, bis die α-Modifikation vollständig in die β-Modifikation überführt ist.

Die vollständige Überführung der α- in die β-Modifikation nimmt in der Regel 0,5 bis 5 Stunden in Anspruch, wobei eine Reaktionskontrolle durch röntgenographische oder mikroskopische Untersuchung von während der Hitzebehandlung entnommenen Proben erfolgen kann.

Bei der Überführung der α- in die β-Modifikation kann ein Zusatz einer oder mehrerer oberflächenaktiver Substanzen zu der wäßrigen Phase zweckmäßig sein. Diese oberflächenaktiven Substanzen können benetzend, viskositätsmindernd, dispergierend oder anlösend wirken und anionischer, kationischer oder nichtionischer Natur sein.

Geeignete oberflächenaktive Substanzen sind z.B. Alkalisalze von Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole, Fettsäurepolyglykolester und tertiäre Phosphorsäureester. Die oberflächenaktiven Substanzen können einzeln oder in Kombination miteinander verwendet werden. Die Menge an oberflächenaktiver Substanz, bezogen auf die Menge an Farbstoff der Formel I in der α-Modifikation, beträgt in der Regel 0,01 bis 400 Gew.-% und hängt von der Weiterverarbeitung ab.

Nach der Überführung in die β-Modifikation kann der Farbstoff beispielsweise durch Filtration aus der wäßrigen Suspension isoliert werden. Zur Vermeidung einer Belastung des Abwassers und um Ausbeuteverluste zu vermeiden, werden hierbei in der Regel nur 0,01 bis 10 Gew.-%, vorzugsweise 0,1 bis 1 Gew.-% der oberflächenaktiven Substanzen eingesetzt.

Es ist jedoch auch möglich, den Farbstoff unmittelbar nach der Wärmebehandlung ohne Zwischenisolierung zu finishen, das heißt in die handelsüblichen Pulver- oder Flüssigpräparationen zu überführen. Zu diesem Zweck wird die wärmebehandelte Suspension durch Mahlung in eine Dispersion überführt. Es ist dabei bevorzugt, die Wärmebehandlung in Gegenwart derjenigen Dispergier- und gegebenenfalls auch Hilfsmittel durchzuführen, die in der gefinishten Pulver- oder Flüssigpräparation enthalten sein sollen, oder in Gegenwart eines Teils dieser Mittel. Diese Dispergiermittel sind mit den oben genannten oberflächenaktiven Substanzen identisch. Wurde während der Wärmebehandlung nicht die Gesamtmenge dieser Dispergier- und Hilfsmittel zugesetzt, so wird vor der Mahlung die Restmenge zugegeben. Zur Wärmebehandlung werden in diesem Falle in der Regel 10 bis 400 Gew.-%, vorzugsweise 20 bis 200 Gew.-%, oberflächenaktive Substanzen, bezogen auf den Farbstoff in der α-Modifikation, zugegeben.

Die Überführung der α- in die β-Modifikation durch Wärmebehandlung in wäßriger Phase kann auch unter Zusatz eines oder mehrerer organischer Lösungsmittel erfolgen. Diese organischen Lösungsmittel können entweder mit Wasser in jedem Verhältnis mischbar sein oder sich nicht oder aber nur wenig mit Wasser mischen.

Mit Wasser mischbare Lösungsmittel sind beispielsweise Ethanol, i-Propanol und Dimethylsulfoxid (DMSO). Mit Wasser nicht oder nur wenig mischbare Lösungsmittel sind beispielsweise n-Butanol, Butylacetat und Toluol.

Die Temperaturen für die Hitzebehandlung in wäßriger Phase unter Zusatz von organischen Lösungsmitteln liegen vorzugsweise zwischen 70 und 130°C. In Abhängigkeit von der Temperatur der Hitzebehandlung bzw. des Siedepunkts des zugesetzten organischen Lösungsmittels kann es erforderlich sein, die Hitzebehandlung unter Druck, z.B. in einem Autoklaven, durchzuführen. Die Dauer der Hitzebehandlung richtet sich u.a. nach dem Lösevermögen der flüssigen Phase, also u.a. auch nach dem Lösevermögen des zugesetzten organischen Lösungsmittels und nach dessen Mengenanteil.

Die Menge an organischen Lösungsmitteln, bezogen auf die wäßrige Phase, kann in weiten Grenzen variieren. Bei mit Wasser mischbaren Lösungsmitteln kann sie zwischen 5 und 95 Gew.-%, vorzugsweise zwischen 5 und 30 Gew.-%, liegen. Bei mit Wasser wenig oder nicht mischbaren Lösungsmitteln liegt sie im allgemeinen zwischen 1 und 25 Gew.-%, vorzugsweise bei 2 bis 10 Gew.-%.

Nach der Überführung in die β-Modifikation wird das organische Lösungsmittel in der Regel durch Destillation oder Wasserdampfdestillation von der Farbstoffsuspension abgetrennt und der Farbstoff aus wäßriger Phase durch Filtration isoliert. Der Farbstoff kann jedoch auch aus dem Lösungsmittelgemisch direkt durch Filtration isoliert werden.

Vorteilhaft ist es, beim Erhitzen des Farbstoffs in wäßriger Phase, sowohl einer rein wäßrigen als auch einer organische Lösungsmittel enthaltenden Phase, den pH-Wert der Wasserphase auf 6 bis 8, vorzugsweise 7 einzustellen und bei diesem pH-Wert zu halten, da es sonst zu Farbstärkeverlusten und Farbtonabweichungen kommen kann.

Die α-Modifikationen des Farbstoffes der Formel I können auch durch Umkristallisation in die β-Modifikation überführt werden, vorzugsweise, indem man das Auskristallisieren bei Temperaturen über 70°C beginnen läßt. Als Lösungsmittel können dabei organische Lösungsmittel, Mischungen von organischen Lösungsmitteln oder auch Mischungen von wassermischbaren organischen Lösungsmitteln mit Wasser dienen. Geeignete organische Lösungsmittel sind beispielsweise Ethanol, Butylacetat, Toluol, Dimethylformamid und insbesondere Dimethylsulfoxid.

Sinnvollerweise wird die umzuwandelnde α-Modifikation in dem gewählten Lösungsmittel durch Erwärmen gelöst, worauf beim Abkühlen die β-Modifikation auskristallisiert. Alternativ kann die β-Modifikation durch Zugabe eines schlechter lösenden Lösungsmittels, zum Beispiel Wasser, aus der Lösung ausgefällt werden. Bevorzugt läßt man dabei das Auskristallisieren des Farbstoffs bei Temperaturen zwischen 70 und 130°C, bevorzugt zwischen 70 und 100°C beginnen, insbesondere wenn Dimethylsulfoxid als Lösungsmittel verwendet wird. Dies läßt sich z.B. erreichen, wenn die Farbstoffkonzentration im Lösungsmittel so gewählt wird, daß die Sättigungsgrenze bei 70°C oder darüber liegt.

Der erhaltene Farbstoff in der β-Modifikation kann durch Filtration aus dem Lösungsmittel isoliert werden. Es ist aber auch möglich, das Lösungsmittel, z.B. nach Wasserzusatz, durch Destillation oder Wasserdampfdestillation auszutreiben und anschließend den Farbstoff durch Filtration aus wäßriger Phase zu isolieren.

Wird der Farbstoff der Formel I durch die oben erwähnte Kupplungsreaktion hergestellt, so ist auch möglich, die Umwandlung der α- in die β-Modifikation unmittelbar nach der Kupplung durch Wärmebehandlung der Kupplungssuspension auszuführen. Dies kann im gleichen Reaktionsgefäß wie die Kupplung erfolgen. Um eine Verseifung des Farbstoffs zu verhindern, wird dabei die aus der Diazotierung und Kupplung stammende Mineralsäure zuvor in der Kupplungssuspension gänzlich oder weitgehend neutralisiert.

Die stabile β-Modifikation kann auch besonders bevorzugt bereits bei der an sich bekannten Synthese des Farbstoffs aus der Vorstufe der allgemeinen Formel II, 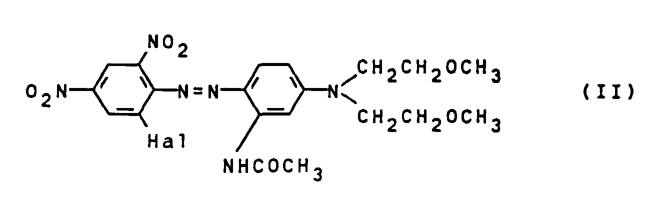 in der Hal für Brom oder Chlor steht, durch den oben erwähnten Cyanaustausch erhalten werden, wenn dabei das Auskristallisieren des Farbstoffs bei Temperaturen über 70°C beginnt, also z.B. bei Temperaturen zwischen 70 und 110°C, insbesondere zwischen 80 und 100°C. Dazu ist es Voraussetzung, daß der Farbstoff der Formel I aus dem Lösungsmittel, in dem der Cyanaustausch stattfindet, bei Temperaturen über 70°C ganz oder teilweise ausfällt bzw. ausgefällt werden kann. Lösungsmittel für den Cyanaustausch sind beispielsweise Alkohole, wie n-Butanol, Diole, wie Ethylenglykol, oder insbesondere dipolare aprotische Lösungsmittel, wie Dimethylformamid, N-Methylpyrrolidon oder bevorzugt Dimethylsulfoxid, die auch im Gemisch miteinander oder z.B. mit Wasser eingesetzt werden können.

Im Hinblick auf eine vollständige Umsetzung beim Cyanaustausch ist es vorteilhaft, wenn das Farbstoff-Vorprodukt oder auch der Farbstoff selbst bei der Umsetzungstemperatur ganz oder größtenteils gelöst sind. Ein Ausfallen des Farbstoffs bei Temperaturen über 70°C nach beendeter Umsetzung kann erreicht werden entweder durch entsprechende Wahl der Lösungsmittelmenge oder aber durch Zusatz von Lösungsmitteln zur Fällung, die ein geringeres Lösevermögen für den Farbstoff besitzen und ihn somit ausfällen. Beispiele für solche Lösungsmittel zum Fällen sind Ethanol, Toluol oder Cyclohexan. Es kann jedoch auch Wasser zum Fällen eingesetzt werden. Solche Lösungsmittel zum Fällen können bereits bei der Umsetzung zugegen sein oder aber nach beendeter Umsetzung oder während des Abkühlvorgangs zugesetzt werden. Die zugesetzte Menge hängt auch hier wiederum vom Lösevermögen oder besser Fällungsvermögen des betreffenden Lösungsmittels ab.

Wenn beim Abkühlen nach der Umsetzung bzw. beim Umkristallisieren bei Temperaturen über 70°C in ausreichender Menge Farbstoffkristalle in der β-Modifikation vorliegen, fallen auch bei tieferen Temperaturen Kristalle in der β-Modifikation nach, so daß man die Ausfällung durch entsprechendes Abkühlen vervollständigen kann.

Der durch eine Hitzebehandlung oder durch Kristallisation in die β-Modifikation überführte bzw. beim Cyanaustausch in der β-Modifikation anfallende Farbstoff der Formel I muß anschließend durch einen Aufmahlvorgang in eine Dispersion, d.h. in eine flüssige oder pulverförmige Farbstoffpräparation, überführt werden. Dieses Aufmahlen geschieht in Mühlen, wie z.B. Kugel-, Schwing-, Perl- oder Sandmühlen oder in Knetern. Nach der Aufmahlung liegt die Größe der Farbstoffteilchen bei ca. 0,1 bis 10 µm. Die Aufmahlung erfolgt in Gegenwart von Dispergiermitteln, wie beispielsweise Kondensationsprodukten aus Naphthalinsulfonsäure und Formaldehyd oder Phenol, Formaldehyd und Natriumbisulfit, Alkalisalzen von Ligninsulfonaten oder Sulfitcelluloseablauge oder Polyvinylsulfonaten, die die Oberfläche der mechanisch zerkleinerten Farbstoffteilchen belegen und so ihre Rekristallisation verhindern. Es kann vorteilhaft sein, neben diesen Dispergiermitteln dem Farbstoff auch andere Hilfsmittel, wie z.B. Netzmittel, Frostschutzmittel, Entstaubungsmittel, Hydrophilierungsmittel oder Biozide bei der Aufmahlung zuzusetzen.

Der für die Herstellung von Farbstoffpulvern erforderliche Trocknungsprozeß kann in handelsüblichen Zerstäubungstrocknern durchgeführt werden.

Die erfindungsgemäße β-Modifikation des Farbstoffs der Formel I neigt in pulverförmigen und insbesondere in flüssigen Farbstoffpräparationen nicht zur Agglomeration, und sie benetzt beim Ansetzen von Färbe- und Klotzflotten sowie auch von Druckteigen besser als die α-Modifikationen und läßt sich rasch und ohne aufwendiges manuelles oder maschinelles Rühren dispergieren. Die Flotten und Druckteige sind homogen und lassen sich in modernen Farbküchen problemlos verarbeiten, ohne die Düsen zu verstopfen.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart der Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die erfindungsgemäße β-Modifikation des Farbstoffs der Formel I eignet sich im Gegensatz zu den α-Modifikationen uneingeschränkt zum Färben und Bedrucken von Textilmaterialien aus Polyester, wie Polyethylenglykolterephthalat, und/oder Celluloseestern, wie Celluloseacetaten, oder von Mischgeweben aus diesen Materialien und Wolle oder Cellulose.

Die Überlegenheit der β-Modifikation im Vergleich zu den α-Modifikationen wird auch beim Färben aus wäßrigem Färbebad unter modernen Praxisbedingungen deutlich. Diese Bedingungen sind gekennzeichnet durch hohe Wickeldichten bei Kreuzspul- und Baumfärbungen, kurze Flottenverhältnisse, also hohe Farbstoffkonzentrationen sowie hohe Scherkräfte in der Färbeflotte bedingt durch hohe Pumpenleistungen. Auch unter diesen Bedingungen neigt die β-Modifikation nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit der erfindungsgemäßen β-Modifikation schließlich wird ebenfalls ein homogenes, stippenfreies Warenbild erhalten.

### Beispiel 1

a) 100 g des Farbstoffs der Formel I, der in der Kristallmodifikation vorliegt, die das in Figur 3 wiedergegebene Röntgenbeugungsdiagramm aufweist, werden in 200 ml Wasser in Gegenwart von 0,5 g eines anionischen Netzmittels auf Basis Ölsäure 3 Stunden auf 95°C erhitzt. Die Kristallmodifikation hat sich dabei in diejenige umgewandelt, die das in Figur 1 wiedergegebene Röntgenbeugungsdiagramm aufweist. Der Farbstoff wird durch Filtration isoliert und mit Wasser gewaschen.
b) 45 g dieses Farbstoffs werden mit 63 g eines Natriumligninsulfonats, 6 g eines methylenverbrückten Alkylphenoloxethylates, das mit Bernsteinsäure partiell verestert ist, und insgesamt 186 g Wasser in einer Sandmühle bis zu einer Feinverteilung von 90 % ≤ 1 µm gemahlen. Die so erhaltene Flüssigpräparation setzt nicht ab, ist homogen und läßt sich mit einem Druck von 3 kp/m² beliebig wiederholbar portionsweise durch eine Düse aus VA-Stahl mit einem Durchmesser von 0,7 mm drücken, ohne daß es bei dieser Dosierung spritzt oder die Düse gar verstopft.

### Beispiel 2

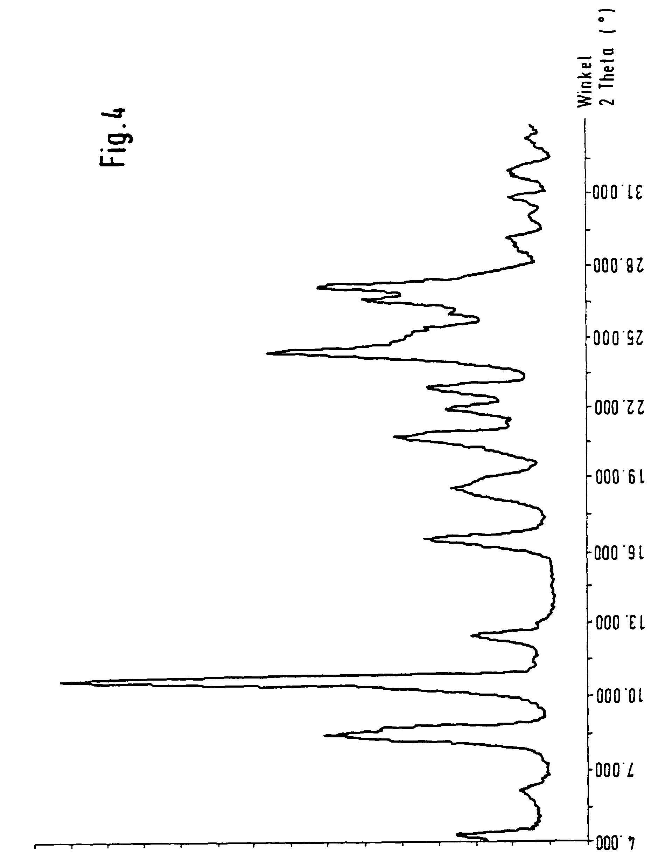

a) 50 g des Farbstoffs der Formel I, der in der Kristallmodifikation, die das in Figur 3 wiedergegebene Röntgenbeugungsdiagramm aufweist, werden in 95 g 90 (gew.-)%igem wäßrigem DMSO bei 100°C gelöst, langsam unter Rühren auf 80°C abgekühlt und ca. 4 Stunden bei 80°C gerührt. Dabei fallen Farbstoffkristalle aus. Unter Rühren wird nun die Temperatur auf Raumtemperatur abgesenkt und der ausgefallene Farbstoff abfiltriert und mit Wasser gewaschen. Er liegt in der Kristallmodifikation vor, die das in Figur 1 wiedergegebene Röntgenbeugungsdiagramm aufweist.
b) Entsprechend den Angaben des Beispiels 1b wird der nach 2a) erhaltene Farbstoff nun in eine Flüssigpräparation überführt. Färbt man mit dieser Flüssigpräparation eine Warenbahn aus Polyester nach dem Thermosolverfahren, so erhält man eine homogene, stippenfreie Blaufärbung.
c) Ersetzt man die 95 g 90 (gew.-)%iges DMSO des Beispiels 2a durch 400 g 90 (gew.-)%iges DMSO, so fallen beim Abkühlen die ersten Farbstoffkristalle erst bei 40°C aus. Kühlt man weiter auf Raumtemperatur ab und isoliert den ausgefallenen Farbstoff, so besitzt die erhaltene Kristallmodifikation das Röntgenspektrum (Cu-K_{α} -Strahlung), das in der Figur 4 wiedergegeben ist. Wird dieser Farbstoff entsprechend den Angaben des Beispiels 2b gefinisht und gefärbt, so zeigt die Färbung deutliche Stippen.

### Beispiel 3

a) In eine Lösung von 6,4 g Natriumcyanid und 11,8 g Kupfer-I-cyanid in 310 g 90%igem wäßrigen DMSO werden bei 80 bis 85°C 135 g des Farbstoffvorprodukts der Formel IIa, 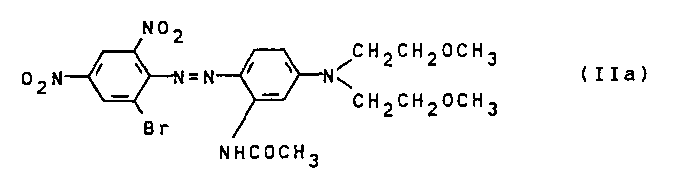 eingetragen, und es wird 1 Stunde bei dieser Temperatur nachgerührt. Schon beim Eintragen und vor allem beim Nachrühren fallen die ersten Kristalle des Farbstoffs der Formel I aus. Der Ansatz wird langsam auf Raumtemperatur abgekühlt, abfiltriert und mit wäßrigem DMSO und Wasser gewaschen. Es werden 120 g einer Farbstoffpaste isoliert, die 96 g des Farbstoffs der Formel I enthält. Der Farbstoff liegt in der Kristallmodifikation vor, die das in Figur 1 wiedergegebene Röntgenbeugungsdiagramm aufweist.
b) 50 g des nach 3a) hergestellten Farbstoffs werden mit 70 g eines Natriumligninsulfonats, 30 g eines Kondensationsprodukts aus Kresol, Nonylphenol, Formaldehyd und Natriumhydrogensulfit und Wasser in einer Perlmühle bis zu einer Feinverteilung von 90 % ≤ 1 µm aufgemahlen. Der so erhaltene Mahlteig wird in einem Sprühtrockner bei einer Eingangstemperatur von 155°C und einer Ausgangstemperatur von 85°C sprühgetrocknet.
c) Wird das nach 3b) erhaltene Pulver zur Herstellung einer Färbeflotte in Wasser gegeben, so dispergiert es teilweise schon beim Absinken auf den Gefäßboden und vollständig nach kurzem Umrühren.
d) Eine Pulverpräparation, die entsprechend den Angaben in 3b) aus einem Farbstoff der Formel I hergestellt wurde, der das Röntgenspektrum der Figur 2 oder der Figur 3 aufweist, muß demgegenüber bis zum Erhalt einer homogenen Dispersion mit einem speziellen Rührer längere Zeit gerührt und evtl. anschließend filtriert werden, um stippenfreie Thermosolfärbungen zu erhalten.
e) Werden mit der gemäß 3b) hergestellten Pulverpräparation Kreuzspulen gefärbt, so sind die erhaltenen Färbungen egal und reibecht, d.h. die Farbtiefen in den äußeren und inneren Lagen des Wickelkörpers sind gleich, und es hat sich kein Farbstoff abgelagert.

## Patentansprüche

1. β-Modifikation des Farbstoffs der Formel I, 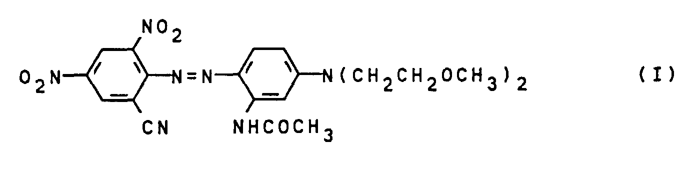 die im Röntgenbeugungsdiagramm (Cu-K_{α}-Strahlung) Linien bei folgenden Beugungswinkel 2 θ (°) aufweist:
Linien starker Intensität: 7,15; 10,25; 25,9;
Linien mittlerer Intensität: 16,9; 19,5; 20,1; 21,85; 22,65; 23,4; 25,2; 28,5; 32,45.

2. Verfahren zur Herstellung der β-Modifikation des Farbstoffs der Formel I gemäß Anspruch 1, dadurch gekennzeichnet, daß der Farbstoff, der nicht in der β-Modifikation vorliegt, in wäßriger Phase auf Temperaturen von 70 bis 150°C erhitzt wird.

3. Verfahren gemäß Anspruch 2, dadurch gekennzeichnet, daß auf 80 bis 130°C erhitzt wird.

4. Verfahren gemäß Anspruch 2 und/oder 3, dadurch gekennzeichnet, daß das Erhitzen in Gegenwart eines oder mehrerer oberflächenaktiver Substanzen erfolgt.

5. Verfahren gemäß einem oder mehreren der Ansprüche 2 bis 4, dadurch gekennzeichnet, daß das Erhitzen in Gegenwart eines oder mehrerer organischer Lösungsmittel erfolgt.

6. Verfahren zur Herstellung der β-Modifikation des Farbstoffs der Formel I gemäß Anspruch 1, dadurch gekennzeichnet, daß man den Farbstoff, der nicht in der β-Modifikation vorliegt, aus einem Lösungsmittel oder Lösungsmittelgemisch umkristallisiert und dabei das Auskristallisieren bei Temperaturen über 70°C beginnen läßt.

7. Verfahren Herstellung der β-Modifikation des Farbstoffs der Formel I gemäß Anspruch 1, dadurch gekennzeichnet, daß man bei der an sich bekannten Synthese des Farbstoffs aus der Verbindung der allgemeinen Formel II, 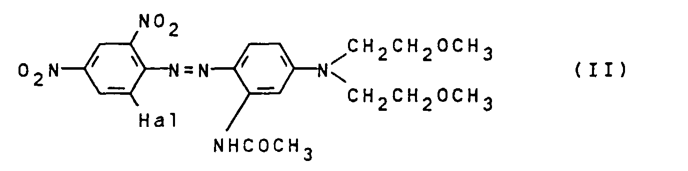 in der Hal für Brom oder Chlor steht, durch Cyanaustausch das Auskristallisieren bei Temperaturen über 70°C beginnen läßt.

8. Verfahren nach Anspruch 7, dadurch gekennzeichnet, daß bei der Synthese Dimethylsulfoxid oder wasserhaltiges Dimethylsulfoxid als Lösungsmittel verwendet wird.

9. Verwendung der β-Modifikation des Farbstoffs der Formel I gemäß Anspruch 1 zur Herstellung von flüssigen oder pulverförmigen Farbstoffpräparationen.

10. Verwendung der β-Modifikation des Farbstoffs der Formel I gemäß Anspruch 1 zum Färben und Bedrucken von Textilmaterialien aus Polyester und/oder Celluloseestern oder von Mischgeweben aus diesen Materialien und Wolle oder Cellulose.

## Claims

1. β modification of the dye of the formula I 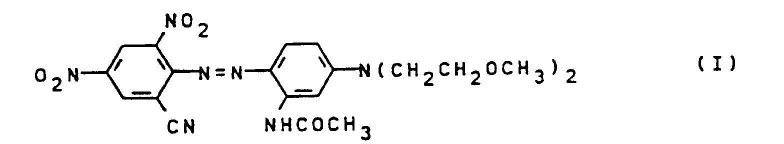 which in the X-ray diffraction pattern (Cu K_{α} radiation) exhibits lines at the following diffraction angles 2 Θ (°) :
high-intensity lines: 7.15, 10.25, 25.9,
medium-intensity lines: 16.9, 19.5, 20.1, 21.85, 22.65, 23.4, 25.2, 28.5, 32.45.

2. Process for preparing the β modification of the dye of the formula I according to Claim 1, characterized in that the dye which is not present in the β modification is heated in aqueous phase to temperatures of 70 to 150°C.

3. Process according to Claim 2, characterized in that heating to 80 to 130°C is carried out.

4. Process according to Claim 2 and/or 3, characterized in that heating takes place in the presence of one or more surface-active substances.

5. Process according to one or more of Claims 2 to 4, characterized in that heating takes place in the presence of one or more organic solvents.

6. Process for preparing the β modification of the dye of the formula I according to Claim 1, characterized in that the dye which is not present in the β modification is recrystallized from a solvent or solvent mixture and crystallization is commenced at temperatures above 70°C.

7. Process for preparing the β modification of the dye of the formula I according to Claim 1, characterized in that in the synthesis known per se of the dye from the compound of the general formula II 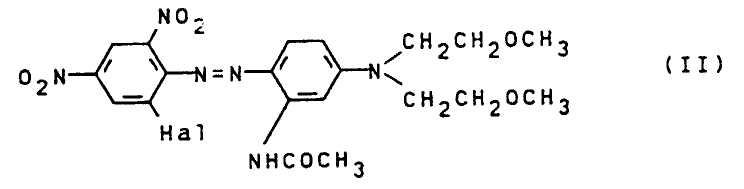 in which Hal represents bromine or chlorine, by cyano exchange, crystallization is commenced at temperatures above 70°C.

8. Process according to Claim 7, characterized in that the solvent used in the synthesis is dimethyl sulphoxide or water-containing dimethyl sulphoxide.

9. Use of the β modification of the dye of the formula I according to Claim 1 for preparing liquid or pulverulent dye preparations.

10. Use of the β modification of the dye of the formula I according to Claim 1 for dyeing and printing textile materials made of polyester and/or cellulose esters or blend fabrics of these materials with wool or cellulose.

## Revendications

1. Modification β du colorant de formule I, 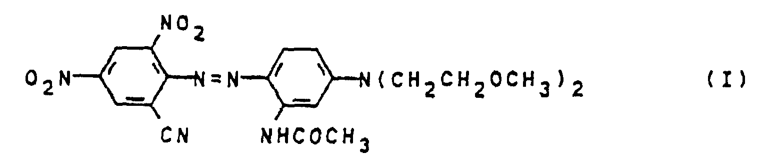 qui présente sur le diagramme de diffraction des rayons X (rayonnement K_{α} du Cu) des raies aux angles de diffraction suivant 2 θ (°) :
lignes de forte intensité : 7,15; 10,25; 25,9;
lignes d'intensité moyenne : 16,9; 19,5; 20,1; 21,85; 22,65; 23,4; 25,2; 28,5; 32,45.

2. Procédé de préparation de la modification β du colorant de formule I suivant la revendication 1, caractérisé en ce que le colorant, qui n'est pas en modification β, est chauffé en phase aqueuse à des températures de 70 à 150°C.

3. Procédé suivant la revendication 2, caractérisé en ce qu'on chauffe à 80 jusqu'à 130°C.

4. Procédé suivant la revendication 2 et/ou 3, caractérisé en ce que le chauffage s'effectue en présence d'une ou de plusieurs substances tensioactives.

5. Procédé suivant l'une ou plusieurs parmi les revendications 2 à 4, caractérisé en ce que le chauffage s'effectue en présence d'un ou de plusieurs solvants organiques.

6. Procédé de préparation de la modification β du colorant de formule I suivant la revendication 1, caractérisé en ce que l'on recristallise le colorant, qui n'est pas en modification β, à partir d'un solvant ou d'un mélange de solvants, et qu'on fait commencer la précipitation des cristaux à des températures au-dessus de 70°C.

7. Procédé de préparation de la modification β du colorant de formule I suivant la revendication 1, caractérisé en ce qu'on fait commencer la précipitation des cristaux à des températures de plus de 70°C lors de la synthèse connue en soi du colorant à partir du composé de formule générale II, 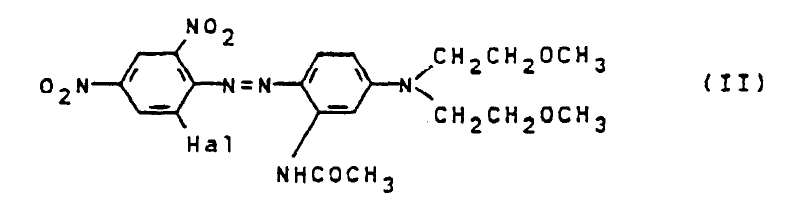 dans laquelle Hal représente un brome ou un chlore, par échange d'un cyano.

8. Procédé suivant la revendication 7, caractérisé en ce que pour la synthèse, on utilise comme solvant du diméthylsulfoxyde ou du diméthylsulfoxyde aqueux.

9. Utilisation de la modification β du colorant de formule I suivant la revendication 1, pour la préparation de préparations colorantes liquides ou pulvérulentes.

10. Utilisation de la modification β du colorant de formule I suivant la revendication 1, pour colorer et imprimer des matières textiles en polyester et/ou esters de cellulose ou des tissus mélangés constitués de ces matériaux et de laine ou de cellulose.
